Europäisches Patentamt

European Patent Office

Office européen des brevets

(11) Veröffentlichungsnummer: **0 432 711 A2**

## (12) EUROPÄISCHE PATENTANMELDUNG

(21) Anmeldenummer: 90123754.5

(22) Anmeldetag: 11.12.90

(51) Int. Cl.⁵: **B62D 13/02**

(30) Priorität: 15.12.89 DE 8914721 U

(43) Veröffentlichungstag der Anmeldung:
19.06.91 Patentblatt 91/25

(84) Benannte Vertragsstaaten:
**DE FR IT NL**

(71) Anmelder: Scheuerle Fahrzeugfabrik GmbH
Öhringer Strasse 16
W-7114 Pfedelbach(DE)

(72) Erfinder: Hauf, Reinhard
Kirchstrasse 38
7110 Michelbach(DE)

(74) Vertreter: Manitz, Gerhart, Dr. Dipl.-Phys. et al
MANITZ, FINSTERWALD & ROTERMUND
Seelbergstrasse 23/25
W-7000 Stuttgart 50(DE)

(54) **Vorrichtung zur Lagerung des Lenkkopfes von Drehgestellen an Lastfahrzeugen.**

(57) Zur Lagerung des (an 5 befestigten) Drehgestelles dient ein Lenkzapfen (4), der mit einem sich nach oben konisch erweiternden Zapfenendstück in eine entsprechende Aufnahmebohrung (3) an einem rahmenfesten Fahrzeugteil (2) eingepreßt ist und mit einem nach unten aus der Aufnahmebohrung (3) herausragenden Ende das Drehgestell haltert.

EP 0 432 711 A2

## VORRICHTUNG ZUR LAGERUNG DES LENKKOPFES VON DREHGESTELLEN AN LASTFAHRZEUGEN

Die Erfindung betrifft eine Vorrichtung zur Lagerung des Lenkkopfes von Drehgestellen an Lastfahrzeugen mit einem zur Fahrzeughochachse etwa parallelen, am Fahrzeugrahmen bzw. an einem rahmenfesten Teil befestigten Lenkzapfen zur Lagerung eines zugeordneten Drehgestelles.

Bei bisherigen Fahrzeugen sind die Lenkzapfen mit dem Fahrzeugrahmen bzw. mit einem rahmenfesten Teil verschweißt, so daß bei Beschädigungen aufgrund von Unfällen u.dgl. unter Umständen außerordentlich umfangreiche Reparaturarbeiten vorgenommen werden müssen; jedenfalls läßt sich der Lenkzapfen bisher im Rahmen einer Reparatur nicht in einfacher Weise austauschen.

Deshalb ist es Aufgabe der Erfindung, eine Lenkkopflagerung zu schaffen, welche besonders reparaturfreundlich ausgebildet ist und insbesondere die Möglichkeit bietet, den Lenkzapfen gegebenenfalls auszutauschen.

Diese Aufgabe wird erfindungsgemäß dadurch gelöst, daß der Lenkzapfen an einer rahmenfesten Lagerplatte durch Preßsitz befestigt ist, indem in einer sich nach oben konisch erweiternden Aufnahmebohrung der Lagerplatte ein sich zum lagerplattenseitigen Ende des Lenkzapfens entsprechend erweiterndes Zapfenendstück eingepreßt ist, wobei das das Drehgestell lagernde lagerplattenferne Ende des Lenkzapfens aus dem engeren Ende der Aufnahmebohrung herausragt.

Dabei ist gemäß einer besonders bevorzugten Ausführungsform der Erfindung vorgesehen, daß auf dem Lenkzapfen ein Radial- und Axiallager für das Drehgestell angeordnet ist, wobei nach oben bzw. in Richtung der Lagerplatte wirkende Axialkräfte unmittelbar auf die Lagerplatte abtragbar und in entgegengesetzter Richtung wirkende Axialkräfte über den Lenkzapfen in die Lagerplatte einleitbar sind.

Die Erfindung beruht also auf dem allgemeinen Gedanken, den Lenkzapfen kraft- und formschlüssig zu halten und das Drehgestell derart zu lagern, daß auftretende Kräfte in Achsrichtung des Lenkzapfens den Kraftschluß nur verstärken, nicht aber schwächen können.

Bei einer Reparatur läßt sich der Lenkzapfen aus der Aufnahmebohrung herausschlagen und gegen einen neuen austauschen, der sodann in die Lagerplatte eingepreßt wird.

Bei der Neuherstellung des Fahrzeuges wird die Lagerplatte mit dem in der Regel bereits eingepreßten Lenkzapfen am Fahrwerksrahmen bzw. an einem rahmenfesten Teil angeschweißt. Danach wird der Preßsitz des Lenkzapfens durch erneutes Einpressen verstärkt, da der vorangegangene Schweißvorgang und die dabei erfolgende Erwärmung in der Regel eine Lockerung des Preßsitzes bewirken.

Im übrigen wird hinsichtlich bevorzugter Merkmale der Erfindung auf die Ansprüche sowie die nachfolgende Erläuterung der Erfindung anhand einer in der Zeichnung dargestellten bevorzugten Ausführungsform verwiesen.

Dabei zeigt

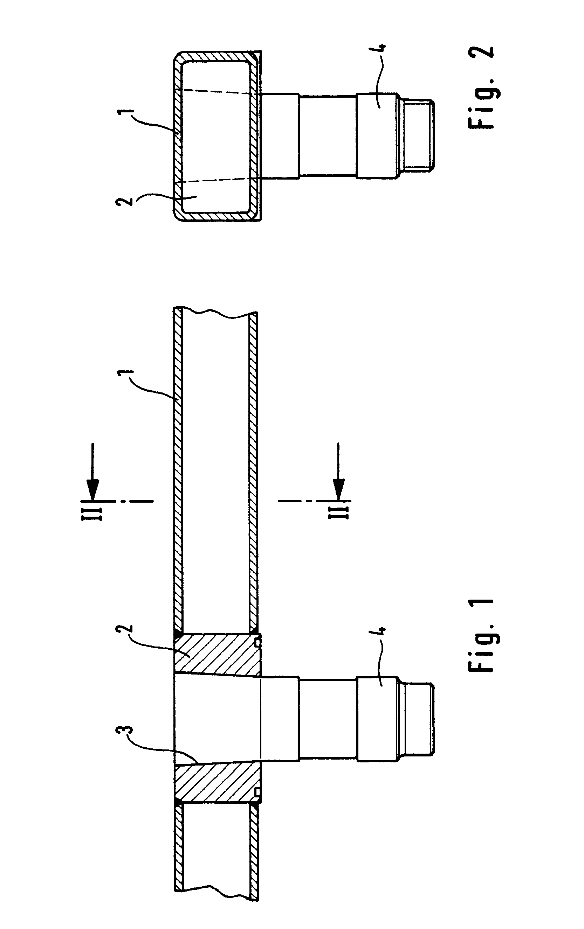

Fig. 1 ein Schnittbild eines Rahmengliedes mit Lagerplatte und Lenkzapfen,

Fig. 2 ein Schnittbild des Rahmengliedes gemäß der Schnittlinie II-II in Fig. 1 und

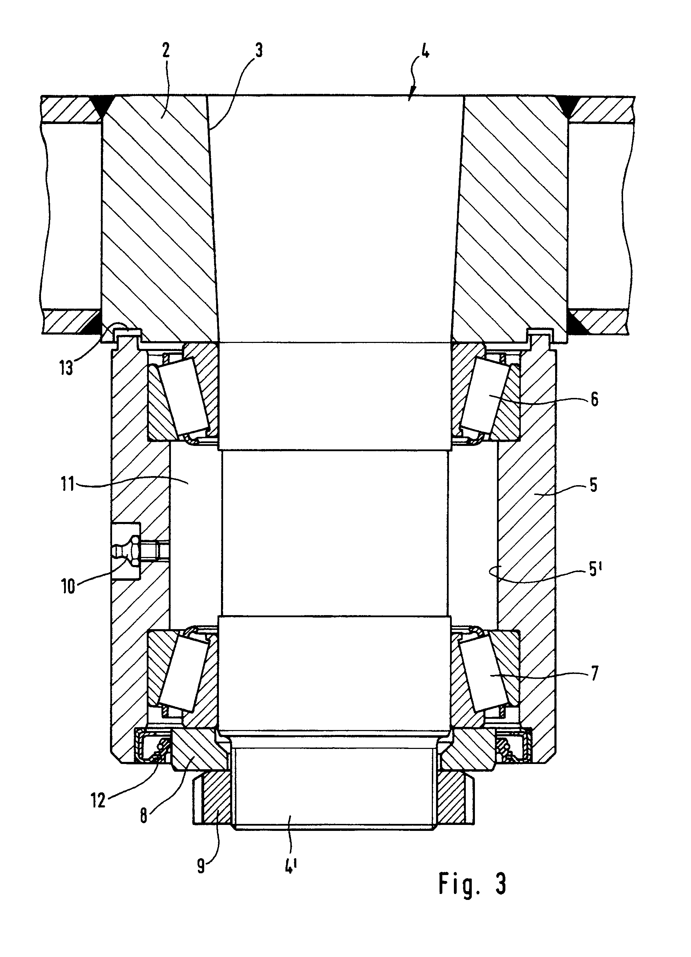

Fig. 3 ein der Fig. 1 entsprechendes Schnittbild mit der kompletten Lenkkopflagerung.

An einem als Lenkzapfenträger 1 dienenden Rahmenglied eines Fahrzeuges ist eine Lagerplatte 2 angeschweißt, welche eine zur Hochachse des Fahrzeuges parallele Bohrung 3 aufweist, die sich nach oben leicht konisch erweitert.

In diese konische Bohrung 3 ist ein Lenkzapfen 4 mit einem entsprechend konischen oberen Ende eingepreßt, derart, daß der Lenkzapfen 4 mit seinem zur Lagerung eines Drehgestelles dienenden zylindrischen Teil nach unten aus dem engeren Ende der Bohrung 3 herausragt.

Ein hülsenartiges Teil 5 des im übrigen nicht dargestellten Drehgestelles ist auf dem Lenkzapfen 4 mittels zweier Kegelrollenlager 6 und 7 drehgelagert.

Dabei sind die Kegelrollenlager 6 und 7 derart angeordnet, daß das obere Kegelrollenlager 6 das hülsenartige Teil 5 an einer axialen Verschiebung nach oben und das untere Kegelrollenlager 7 an einer Verschiebung in entgegengesetzter Richtung hindert. Die dem hülsenartigen Teil 5 zugeordneten Lagerschalen der Kegelrollenlager 6 und 7 stoßen axial jeweils an die zugewandten stufenartigen Stirnränder eines Mittelbereiches 5' des hülsenartigen Teiles mit vermindertem Innendurchmesser. Die lenkzapfenseitige Lagerschale des oberen Kegelrollenlagers 6 stößt axial mit ihrem oberen Stirnrand unmittelbar an die Lagerplatte an, während die lenkzapfenseitige Lagerschale des unteren Kegelrollenlagers 7 axial an einem Ringteil 8 anliegt, welches seinerseits mittels einer Mutter 9 gehaltert ist, die auf einen Gewindeabschnitt 4' am unteren Ende des Lenkzapfens 4 aufgedreht und durch Drehung axial verschiebbar ist. Dementsprechend wird durch die axiale Stellung der Mutter 9 auf dem Gewindeabschnitt 4' das axiale Spiel der Kegelrollenlager 6 und 7 vorgegeben bzw. eingestellt.

Zur Schmierung der Kegelrollenlager 6 und 7 ist am hülsenartigen Teil 5 ein Schmiernippel 10 angeordnet, welcher über einen zwischen dem Mittelbereich 5' des hülsenartigen Teiles 5 und dem Lenkzapfen 4 gebildeten Ringraum 11 mit den Kegelrollenlagern 6 und 7 verbunden ist. Zur Abdichtung des Schmiermittelraumes nach außen ist unterhalb des unteren Kegelrollenlagers 7 zwischen dem Ringteil 8 und dem unteren Ende des hülsenartigen Teiles 5 eine ringförmige Dichtungsanordnung12 angeordnet, während das obere Ende des hülsenartigen Teiles 5 mit einem stirnseitigen Ringsteg in eine zugewandte Ringnut 13 in der Lagerplatte 2 hineinragt und damit eine labyrinthartige Abdichtung bewirkt.

Der Preßsitz des Lenkzapfens 4 in der Bohrung 3 der Lagerplatte 2 kann durch die beim Gebrauch des Fahrzeuges auftretenden Belastungen nur verstärkt werden. Denn das hülsenartige Teil 5 nach oben drängende Axialkräfte werden über das obere Kegelrollenlager 6 ohne Belastung des Lenkzapfens 4 unmittelbar auf die Lagerplatte 2 und damit den Lenkzapfenträger 1 abgetragen, während in entgegengesetzter Richtung wirkende Axialkräfte über das untere Kegelrollenlager 7 über das Ringteil 8 sowie die Mutter 9 auf den Lenkzapfen 4 übertragen werden, wodurch der Lenkzapfen 4 verstärkt in seinen Kegelsitz in der Lagerplatte 2 eingepreßt wird und dabei die genannten Axialkräfte in den Lenkzapfenträger 1 einleitet.

Im übrigen kann die Mutter 9 so weit angezogen werden, daß durch das Anziehmoment der Mutter 9 eine Vorspannung auf die Lager 6 und 7 und damit eine axiale Einzugskraft erzeugt werden, die den Lenkzapfen 4 verstärkt in seinen Kegelsitz einzupressen sucht.

Bei der Neuherstellung eines Fahrzeuges kann der Lenkzapfen 4 vor dem Verschweißen der Lagerplatte 2 mit dem Lenkzapfenträger 1 in die Lagerplatte 2 eingepreßt werden, beispielsweise mit einer Einpreßkraft von 100 kN. Nach Verschweißen der Lagerplatte 2 mit dem Lenkzapfenträger 1 wird dann der Lenkzapfen 4 nachgepreßt, da sich die Vorpressung durch das Schweißen reduziert und die angegebene Vorpreßkraft in der Regel für eine sichere Halterung des Lenkzapfens 4 nicht ausreicht. Das Nachpressen erfolgt mit einer Nachpreßkraft von beispielsweise 500 kN.

Nunmehr kann das Drehgestell montiert werden, wobei - wie oben ausgeführt wurde - das Anziehmoment der Mutter 9 eine axiale Einzugskraft erzeugt, mit der der Lenkzapfen 4 mit seinem oberen Ende zusätzlich in die Bohrung 3 der Lagerplatte 2 eingezogen wird.

Bei einer Demontage des Lenkzapfens wird zunächst das Drehgestell demontiert. Danach wird der Lenkzapfen 4, beispielsweise mittels eines hydraulischen Wagenhebers, herausgedrückt. Stattdessen können der Lenkzapfen 4 auch nach unten abgestützt und das Fahrzeug in beladenem Zustande abgesenkt werden, um den Lenkzapfen 4 von der Lagerplatte 2 zu lösen.

Nunmehr kann ein neuer Lenkzapfen 4 eingesetzt und eingepreßt werden. Danach erfolgt die erneute Montage des Drehgestelles.

## Ansprüche

1.  Vorrichtung zur Lagerung des Lenkkopfes von Drehgestellen an Lastfahrzeugen mit einem zur Fahrzeughochachse etwa parallelen, am Fahrzeugrahmen bzw. an einem rahmenfesten Teil befestigten Lenkzapfen zur Lagerung eines zugeordneten Drehgestelles,
    dadurch gekennzeichnet,
    daß der Lenkzapfen (4) an einer rahmenfesten Lagerplatte (2) durch Preßsitz befestigt ist, indem in einer sich nach oben konisch erweiternden Aufnahmebohrung (3) der Lagerplatte (2) ein sich zum lagerplattenseitigen Ende des Lenkzapfens (4) entsprechend erweiterndes Zapfenendstück eingepreßt ist, wobei das das Drehgestell lagernde lagerplattenferne Ende des Lenkzapfens (4) aus dem engeren Ende der Aufnahmebohrung (3) herausragt.

2.  Vorrichtung nach Anspruch 1, dadurch gekennzeichnet, daß die Lagerplatte (2) rahmenfest verschweißt und der Lenkzapfen (4) in die verschweißte Lagerplatte (2) eingepreßt ist.

3.  Vorrichtung nach einem der Ansprüche 1 und 2, dadurch gekennzeichnet, daß auf dem Lenkzapfen (4) ein Radial- und Axiallager (6,7) für das Drehgestell angeordnet ist, wobei nach oben bzw. in Richtung der Lagerplatte (2) wirkende Axialkräfte unmittelbar auf die Lagerplatte (2) abtragbar und in entgegengesetzter Richtung wirkende Axialkräfte über den Lenkzapfen (4) in die Lagerplatte (2) einleitbar sind.

4.  Vorrichtung nach Anspruch 3, dadurch gekennzeichnet, daß eine erste zapfenseitige Lagerschale des Radial- und Axiallagers (6,7) axial unmittelbar an der Lagerplatte (2) anliegt, und daß eine zweite zapfenseitige Lagerschale auf ihrer von der Lagerplatte (2) abgewandten Seite an einer Ringscheibe (8) bzw. einer auf dem unteren Ende (4') des Lenkzapfens (4) schraubverschiebbaren Mutter (9) axial abgestützt ist.

Fig. 1

Fig. 2

EP 0 432 711 A2

Fig. 3